# EUROPEAN PATENT APPLICATION

(11) **EP 4 063 624 A1**
(43) Date of publication of application: **28.09.2022**
(21) Application number: 22163444.7
(22) Date of filing: 22.03.2022
(51) Int. Cl.: F01N 3/10, F01N 13/00, F02B 43/00

(54) **PROPULSION SYSTEM FOR HEAVY VEHICLES INCLUDING AN EXHAUST GAS AFTER-TREATMENT SYSTEM**

(30) Priority: 24.03.2021 IT 202100007202
(71) Applicant: FPT Industrial S.p.A., 10156 Torino (IT)
(72) Inventor: PIDRIA, Marco Federico, 10156 Torino (IT); MERLONE BORLA, Edoardo, 10156 Torino (IT); MANCINO, Gabriella, 10156 Torino (IT)
(74) Representative: Fiume, Orazio

(57) **Abstract**

Propulsion system (PS) for heavy vehicles (VHE) comprising an exhaust gas after-treatment system (ATS), the propulsion system comprising a spark-ignition internal combustion engine (E) comprising fuel supplying means (EJ) arranged to feed the internal combustion engine with a mixture of air/natural gas in a stoichiometric ratio, the exhaust gas after-treatment system comprising a three-way catalyst (TWC) connected to an exhaust manifold (EP) of the internal combustion engine and an ammonia converter (MC) directly connected to the three-way catalyst, wherein the ammonia converter comprises a matrix coated exclusively with a platinum-based or platinum-palladium-based coating.

## Description

### Field of the invention

The present invention relates to the field of ATS exhaust gas after treatment systems for positive ignition engines and in particular for engines fuelled by natural gas.

### State of the art

In the field of spark ignition engines, also known as Otto cycle engines, compliance with the stoichiometric ratio is essential to comply with the limits imposed by regulations on polluting emissions.

Combustion, in Otto cycle engines, is controlled by a spark plug.

This problem is particularly felt in the context of gas-powered engines, including natural gas, commonly referred to as methane, which can be stored in tanks in gaseous (CNG) or liquid (LNG) form.

The quantity of fuel to be injected depends on the mass of fresh air introduced into the engine, which is measured by means of a special sensor located at the intake manifold.

The internal combustion engine fuel supply can be operated by means of a closed loop control, in which a linear lambda probe is used as a feedback signal in order to obtain a target air/fuel ratio (A/F).

Lambda probes allow to adequately correct the fuel supply of the internal combustion engine and ensure the stoichiometric combustion. More specifically, the fuel supply control is done in such a way as to force an oscillation of the amount of fuel injected, so as to alternatively lead to combustion in the cylinder pour fuel, lean mixture, or excess fuel, rich mixture.

Therefore, the three-way catalyst (TWC) is forced to work in a bi-stable situation, that is, continuously oscillating between an oxidizing and a reducing operation.

The fundamental problem of engines fuelled by natural gas and combined with a TWC is the undesired production of NH3 and N20 as described in *"*Formation of NH3 and N2O in a modern natural gas three-way catalyst designed for heavy-duty vehicles: the effects of simulated exhaust gas composition and aging" Pauliina Nevalainena et al. Applied Catalysis A: General Volume 552, 25 February 2018, Pages 30-37.

A solution proposed by the prior art is to couple a Selective Catalyst reduction (SCR) downstream of the TWC in engines fed with lean mixture. Since the exhaust gas stream is not supplied with a urea-based reducing agent, then the SCR is referred to as "passive", as there is no injection of a urea-based reducing agent.

In engines fuelled by natural gas with a stoichiometric mixture, this solution is not feasible.

The Clean-up-catalyst (CUC) is known, typically used in diesel cycle engines, downstream of an active SCR.

These devices include a matrix, typically of cordierite, coated with two superimposed layers: a deep platinum-based layer which performs the function of oxidation of NH3 into NOx and a surface layer based on zeolites which performs the function of NOx reduction by further NH3.

If not specifically excluded in the detailed description that follows, what is described in this chapter is to be considered as an integral part of the detailed description.

### Summary of the invention

The purpose of the present invention is to indicate a system for breaking down the ammonia produced by a three-way catalyst implemented downstream of a spark ignition engine fed with a stoichiometric mixture.

The basic idea of the present invention is to implement a sort of CUC equipped, however, exclusively with a Platinum-based or Platinum-Palladium-based coating. In general, these coatings are referred to as "PGM".

During experiments, it has been found that in representative operating conditions of an internal combustion engine fuelled with a mixture of air/natural gas in a stoichiometric ratio, the platinum-based coating is capable of converting NH3 into N2 even in the absence of oxygen by means of a redox mechanism on the sites of noble metal. This fact turns out to be particularly useful especially when the spark ignition engine is fuelled by natural gas to move a heavy vehicle. Indeed, the legislation is particularly constrained in the case of heavy vehicles and this proposal can represent a solution to continue to implement natural gas in heavy vehicle context, which in itself is an ecological choice.

From the following drawings it can therefore be seen that there is no introduction of fresh air or oxygen inside the ATS. Furthermore, the introduction of ammonia from the outside is not envisaged.

The dependent claims describe preferred variants of the invention, forming an integral part of this description.

### Brief description of the figures

Further objects and advantages of the present invention will become clear from the following detailed description of an example of its embodiment (and its variants) and from the attached drawings given purely by way of non-limiting explanation, in which:
Figure 1 shows a diagram of a propulsion system according to the present invention;
Figure 2 schematically shows a commercial or heavy vehicle equipped with the propulsion system of Figure 1.

The same reference numbers and letters in the figures identify the same elements or components or functions.

It should be noted that the terms "first", "second", "third", "upper", "lower" and the like can be used here to distinguish various elements. These terms do not imply a spatial, sequential or hierarchical order for the modified elements unless specifically indicated or inferred from the text.

The elements and features illustrated in the various preferred embodiments, including the drawings, can be combined with each other without however departing from the scope of this application as described below.

### Detailed description of exemplary embodiments

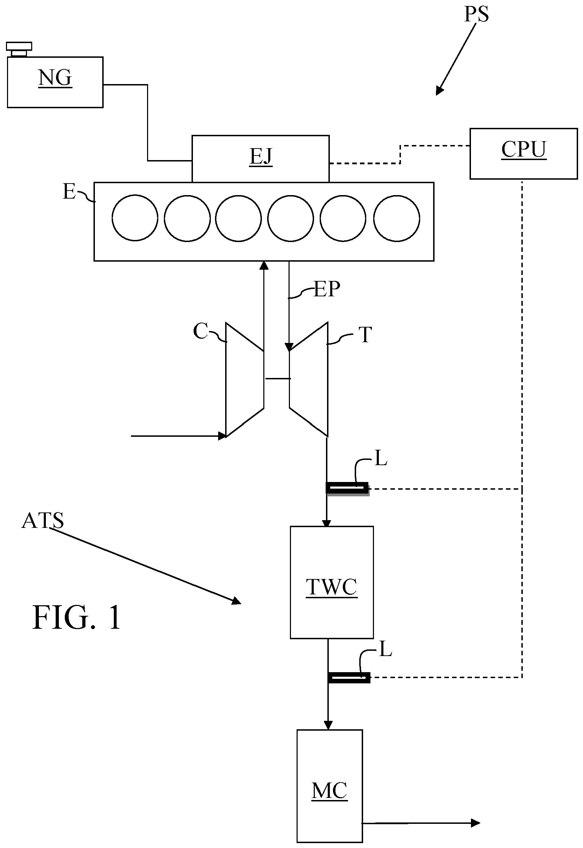

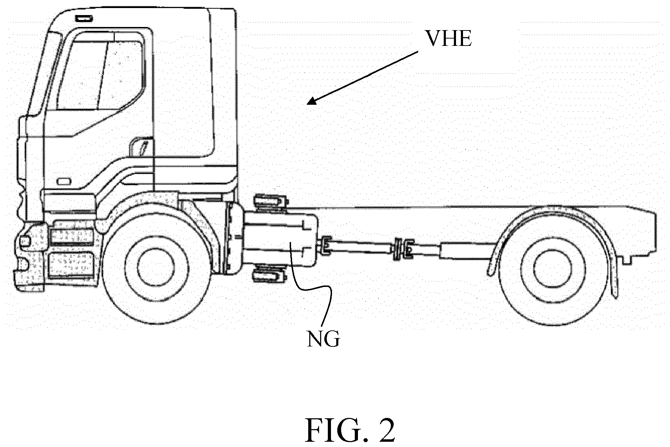

Figure 1 schematically shows a propulsion system PS according to the present invention, intended to be implemented in a heavy vehicle VHE shown schematically in Figure 2.

The propulsion system PS includes an exhaust gas post-treatment system ATS comprising exclusively two devices, namely a three-way catalyst and an ammonia converter placed immediately downstream of the three-way catalyst, according to a natural outflow of the exhausted gases.

The internal combustion engine E comprises fuel feeding means EJ arranged to feed the engine itself by means of a mixture of air/natural gas in stoichiometric ratio.

The feeding means comprise, for example, an injector for each intake manifold of the internal combustion engine. In the example, the internal combustion engine comprises six cylinders and six related intake manifolds. However, different solutions can be found.

The feeding means EJ are operatively connected to a natural gas tank, which can be liquefied or compressed.

The ammonia converter MC, directly connected to the three-way catalyst TWC, comprises a matrix coated exclusively with a platinum-based or platinum-palladium-based coating. It has indeed been found that, in the usual conditions of oscillations between lean and rich fuel feeding, in conditions of rich feeding, this coating allows the ammonia produced by the TWC to be selectively converted to nitrogen by means of a redox mechanism on the noble metal sites.

Therefore, as can be seen from Figure 1, neither the injection of air or oxygen into the ATS nor the injection of a urea-based reducing agent into the ATS is envisaged.

Preferably, the cordierite matrix obtained by extrusion can have a more or less high density of cells of the honeycomb structure, varying from 600 CPSI to optimize the exposed surface of the catalytic coating up to 200 CPSI to minimize the contribution of the additional element to the back pressure of the whole system. Preferably, the catalytic coating can be constituted by a support based on gamma-alumina (Al2O3) resistant to high temperature against sintering or other oxides CeO2, ZrO2, with a high surface area to optimize the dispersion of noble metals for the purpose of a high catalytic activity. The loading of the catalytic coating takes place by impregnation with a solution containing precursor salts of the noble metals, Platinum, Palladium or mixtures of the two, for total quantities that can vary from 1 to 10 g/ft3 with variable distribution between Pt and Pd. After impregnation, the matrix on which the catalytic coating has been applied is destined for drying and then calcination in air for the purpose of decomposition of the noble metal precursor salts.

Preferably, the cordierite ceramic matrix is obtained by extrusion with a final honeycomb structure with cell density ranging between 200 and 600 CPSI. The catalytic coating is applied to this matrix by impregnation, consisting of an oxide-based support including aluminium, cerium or zirconium oxide, with a high surface area and noble metals, Platinum or Platinum and Palladium, finely dispersed with variable ratio between them. This converter allows to consume the NH3 coming from the TWC, which precedes the converter, by means of a redox mechanism on the noble metal sites by selectively converting NH3 to N2. Combustion control is achieved by means of a processing unit CPU operatively connected to the fuel supply means EJ and to one or more lambda probes L arranged along the exhaust gas path, for example upstream and/or downstream of the three-way catalyst.

Preferably, a lambda probe is arranged immediately upstream and one immediately downstream of the three-way catalyst. According to a preferred variant of the invention, the three-way catalyst is directly connected with the exhaust manifold of the internal combustion engine.

According to another preferred variant of the invention, the internal combustion engine is supercharged by means of a turbocharger unit comprises a turbine operatively arranged on the exhaust line immediately upstream of the three-way catalyst so as to be directly connected to the exhaust manifold of the internal combustion engine.

The compressor C of the turbocharger unit is driven in rotation by the turbine T in order to compress the fresh air entering the internal combustion engine. Implementation variants of the described non-limiting example are possible, without however departing from the scope of protection of the present invention, including all the equivalent embodiments for a person skilled in the art, to the content of the claims.

From the above description, the person skilled in the art is able to realize the object of the invention without introducing further construction details.

## Claims

1. Propulsion system (PS) for heavy vehicles (VHE) comprising an exhaust gas after-treatment system (ATS), the propulsion system comprising a spark-ignition internal combustion engine (E) comprising fuel supplying means (EJ) arranged to feed the internal combustion engine with a mixture of air/natural gas in a stoichiometric ratio, the exhaust gas after-treatment system comprising a three-way catalyst (TWC) connected to an exhaust manifold (EP) of the internal combustion engine and an ammonia converter (MC) directly connected to the three-way catalyst, wherein the ammonia converter comprises a matrix coated exclusively with a platinum-based or platinum-palladium-based coating.

2. System according to claim 1, wherein
- said three-way catalyst (TWC) is connected directly to the exhaust manifold or
- said three-way catalyst (TWC) is connected directly to an outlet of a turbine (T) and wherein the turbine is directly connected to the exhaust manifold.

3. System according to claim 2, wherein said turbine is arranged to drive in rotation a compressor (C) arranged to supercharge the internal combustion engine (E).

4. System according to any one of the preceding claims, wherein said ammonia converter comprises a ceramic matrix of cordierite configured as a honeycomb with cell density varying between 200 and 600 CPSI.

5. System according to any one of the preceding claims, wherein said Platinum-based coating or based on a mixture of Platinum and Palladium comprises an overall quantity ranging between 1 and 10 g/ft3.

6. Method of abatement of pollutants produced by a propulsion system (PS) for heavy vehicles (VHE) comprising an exhaust gas after-treatment system (ATS), the propulsion system comprising a spark ignition internal combustion engine (E) comprising fuel feeding means (EJ) arranged to feed the internal combustion engine with a mixture of air/natural gas in a stoichiometric ratio, the exhaust gas post-treatment system comprising a three-way catalyst (TWC) connected to an exhaust manifold of the internal combustion engine (EP), the method comprising the step of connecting an ammonia converter (MC) directly with the three-way catalyst, wherein the ammonia converter is made from a matrix coated exclusively with a Platinum-based coating or Platinum and Palladium-based coating.

7. Method according to claim 6, wherein said ammonia converter is realized by the following steps in succession:
- extrusion of a cordierite matrix with a honeycomb structure and variable cell density between 200 CPSI and 600 CPSI,
- loading of the matrix with a support based on aluminium oxide, cerium or zirconium and Platinum or Platinum and Palladium, suitably dispersed,
- drying,
- calcination in air.

8. Commercial or heavy vehicle comprising a natural gas tank (NG) and a propulsion system according to any one of the preceding claims 1 - 5, operatively connected to said natural gas tank.
